(19) Europäisches Patentamt
European Patent Office
Office européen des brevets

(11) **EP 4 593 116 A1**

(12) **EUROPEAN PATENT APPLICATION**
published in accordance with Art. 153(4) EPC

(43) Date of publication:
**30.07.2025 Bulletin 2025/31**

(21) Application number: **23867972.4**

(22) Date of filing: **29.08.2023**

(51) International Patent Classification (IPC):
**H01M 4/525** $^{(2010.01)}$   **H01M 4/36** $^{(2006.01)}$

(52) Cooperative Patent Classification (CPC):
**H01M 4/36; H01M 4/525;** Y02E 60/10

(86) International application number:
**PCT/JP2023/031101**

(87) International publication number:
**WO 2024/062848 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.09.2022 JP 2022150865**

(71) Applicant: **Panasonic Intellectual Property Management Co., Ltd.**
**Kadoma-shi, Osaka 571-0057 (JP)**

(72) Inventors:
• **KO, Takashi**
  **Kadoma-shi, Osaka 571-0057 (JP)**
• **INOUE, Katsuya**
  **Kadoma-shi, Osaka 571-0057 (JP)**
• **OGASAWARA, Takeshi**
  **Kadoma-shi, Osaka 571-0057 (JP)**

(74) Representative: **Novagraaf International SA**
**Chemin de l'Echo 3**
**1213 Onex, Geneva (CH)**

(54) **SECONDARY BATTERY POSITIVE ELECTRODE ACTIVE MATERIAL AND SECONDARY BATTERY**

(57)   A secondary battery positive electrode active material that is an exemplary embodiment contains a first lithium nickel composite oxide having a D50 on a volume basis of 8-30 μm and contains a second lithium nickel composite oxide having a D50 on a volume basis of 6 μm or less. The first lithium nickel composite oxide is a secondary particle formed by the aggregation of primary particles, and at least one selection from Ca and Sr is present on the primary particle surface. The content of the total of Ca plus Sr for the first lithium nickel composite oxide is greater than or equal to the content of the total of Ca plus Sr for the second lithium nickel composite oxide.

Figure 1

EP 4 593 116 A1

**Description**

TECHNICAL FIELD

The present disclosure relates to a positive electrode active material and a secondary battery using the positive electrode active material, and more particularly to a positive electrode active material suitable for a non-aqueous electrolyte secondary battery.

BACKGROUND ART

In recent years, secondary batteries such as lithium ion batteries have been widely used in applications requiring high capacity, high durability, rapid charge-discharge performance, and the like, such as in-vehicle applications and power storage applications. The positive electrode active material, which is a main constituent element of secondary batteries, has a significant effect on battery performance, and many studies have therefore been conducted on positive electrode active materials. For example, Patent Literature 1 discloses, as an active material for non-aqueous electrolyte secondary battery, a lithium transition metal composite oxide having an $\alpha$-NaFeO$_2$ structure. This composite oxide contains one or more selected from the group consisting of Mn, Ni, and Co as the transition metal element, and an alkaline earth metal and W are present at the particle surface of the composite oxide. Patent Literature 1 describes the advantageous effect that the charge-discharge cycle characteristic of the battery is improved by using this composite oxide.

CITATION LIST

PATENT LITERATURE

PATENT LITERATURE 1: Japanese Unexamined Patent Application Publication No. 2018-129221

SUMMARY

In a secondary battery such as a lithium ion battery, it is important to reduce the internal resistance so as to, for example, improve the output characteristic and enhance the rapid charge-discharge performance. Conventional positive electrode active materials including that of Patent Literature 1 still have much room for improvement in terms of reducing the battery internal resistance.

A positive electrode active material for secondary battery according to one aspect of the present disclosure includes a first lithium nickel composite oxide having a particle size of greater than or equal to 8 $\mu$m and less than or equal to 30 $\mu$m, and a second lithium nickel composite oxide having a particle size of less than or equal to 6 $\mu$m. The first lithium nickel composite oxide is in the form of secondary particles formed by aggregation of primary particles, with at least one selected from Ca and Sr being present at the surface of the primary particles. The total content of Ca and Sr in the first lithium nickel composite oxide is greater than or equal to the total content of Ca and Sr in the second lithium nickel composite oxide.

A positive electrode active material for secondary battery according to another aspect of the present disclosure includes a first lithium nickel composite oxide having a volume-based median diameter (D50) of greater than or equal to 8 $\mu$m and less than or equal to 30 $\mu$m, and a second lithium nickel composite oxide having a volume-based median diameter (D50) of less than or equal to 6 $\mu$m. The first lithium nickel composite oxide is in the form of secondary particles formed by aggregation of primary particles, with at least one selected from Ca and Sr being present at the surface of the primary particles. The total content of Ca and Sr in the first lithium nickel composite oxide is greater than or equal to the total content of Ca and Sr in the second lithium nickel composite oxide.

A secondary battery according to the present disclosure includes a positive electrode including the above-described positive electrode active material, a negative electrode, and an electrolyte.

The positive electrode active material according to the present disclosure can reduce the internal resistance of a secondary battery. The secondary battery using the positive electrode active material according to the present disclosure has low internal resistance and excellent output characteristic.

BRIEF DESCRIPTION OF DRAWING

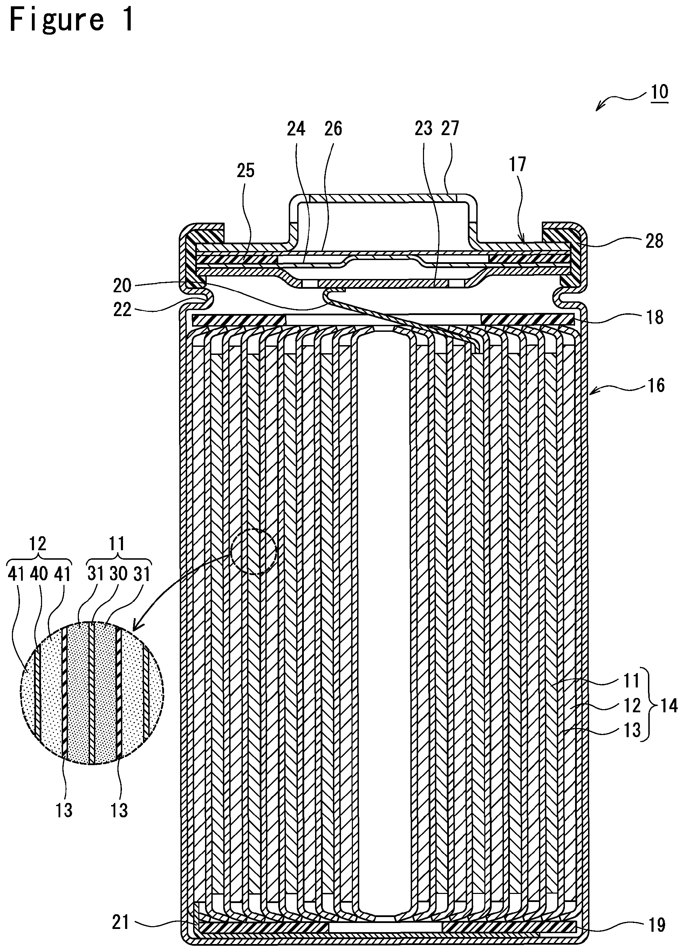

FIG. 1 is a diagram schematically illustrating an axial cross section of a secondary battery (or cylindrical battery) according to an example embodiment.

DESCRIPTION OF EMBODIMENTS

The present inventors have found that the internal resistance of a battery is specifically reduced by using, as the positive electrode active material, a first lithium nickel composite oxide having a large particle size and a second lithium nickel composite oxide having a small particle size, and by causing at least one selected from Ca and Sr to be present in a large amount at the surface of primary particles constituting the first lithium nickel composite oxide in the form of large-sized particles. It is considered that when Ca or Sr is present at the particle surface of the positive electrode active material, the reaction resistance of the positive electrode can be reduced.

Since large-sized particles have a smaller specific surface area and higher interfacial migration resistance than small-sized particles, it is considered that when at least one selected from Ca and Sr is present in a large amount at the surface of primary particles constituting the large-sized particles, the resistance of the positive electrode can be efficiently and effectively reduced without impairing other performance characteristics of the positive electrode, such as electronic conductivity.

Example embodiments of a positive electrode active material according to the present disclosure and a secondary battery using the positive electrode active material will now be described in detail by reference to the drawings. Configurations obtained by selectively combining the constituent elements of a plurality of embodiments and variants described below are included within the scope of the present disclosure.

In the following, although a cylindrical battery 10 in which a spiral-type electrode assembly 14 is housed in a bottomed cylindrical outer can 16 will be described as the secondary battery by way of example, the outer casing of the battery is not limited to a cylindrical outer can. The secondary battery according to the present disclosure may be, for example, a rectangular battery having a rectangular outer can or a coin-shaped battery having a coin-shaped outer can, or may be a pouch-type battery having an outer casing composed of a laminate sheet including a metal layer and a resin layer. Furthermore, the electrode assembly is not limited to being of a spiral type, and may be a laminate-type electrode assembly formed by alternately laminating a plurality of positive electrodes and a plurality of negative electrodes with interposed separators.

FIG. 1 is a cross-sectional view of a cylindrical battery 10 according to an example embodiment. As shown in FIG. 1, the cylindrical battery 10 comprises a spiral-type electrode assembly 14, an electrolyte, and an outer can 16 that houses the electrode assembly 14 and the electrolyte. The electrode assembly 14 comprises a positive electrode 11, a negative electrode 12, and a separator 13, and has a spiral structure formed by spirally winding the positive electrode 11 and the negative electrode 12 with the separator 13 interposed. The outer can 16 is a bottomed cylindrical metal container having an opening at one axial end, and the opening of the outer can 16 is closed by a sealing assembly 17. For convenience of explanation, the side of the battery toward the sealing assembly 17 will be referred to as "upper", and the side toward the bottom of the outer can 16 will be referred to as "lower".

The electrolyte is not limited to a liquid electrolyte (or electrolyte solution), and may be a solid electrolyte. Further, the electrolyte may be an aqueous electrolyte, but in the present embodiment, a non-aqueous electrolyte (or non-aqueous electrolyte solution) is used. The non-aqueous electrolyte solution contains a non-aqueous solvent and an electrolyte salt dissolved in the non-aqueous solvent. As the non-aqueous solvent, for example, esters, ethers, nitriles, amides, a mixed solvent containing two or more of the foregoing, and the like is used. Examples of the non-aqueous solvent include ethylene carbonate (EC), ethyl methyl carbonate (EMC), dimethyl carbonate (DMC), diethyl carbonate (DEC), and a mixed solvent containing the foregoing solvents. The non-aqueous solvent may contain a halogen-substituted product (such as fluoroethylene carbonate) obtained by substituting at least part of hydrogen atoms in the above solvents with halogen atoms such as fluorine. As the electrolyte salt, for example, a lithium salt such as $LiPF_6$ is used.

The positive electrode 11, the negative electrode 12, and the separator 13, which constitute the electrode assembly 14, are all long strip-shaped members, and are alternately laminated in the radial direction of the electrode assembly 14 by being wound in a spiral shape. The negative electrode 12 is formed to have a size slightly larger than the positive electrode 11 in order to prevent lithium deposition. That is, the negative electrode 12 is formed to be longer than the positive electrode 11 in the lengthwise direction and in the widthwise direction. The separator 13 is formed to have a size slightly larger than at least the positive electrode 11, and, for example, two sheets of separators are arranged so as to sandwich the positive electrode 11. The electrode assembly 14 has a positive electrode lead 20 connected to the positive electrode 11 by welding or the like, and a negative electrode lead 21 connected to the negative electrode 12 by welding or the like.

Above and below the electrode assembly 14, insulating plates 18, 19 are provided respectively. In the example shown in FIG. 1, the positive electrode lead 20 extends through a through hole in the insulating plate 18 and toward the sealing assembly 17, while the negative electrode lead 21 extends outside the insulating plate 19 and toward the bottom of the outer can 16. The positive electrode lead 20 is connected by welding or the like to the lower surface of an internal terminal plate 23 of the sealing assembly 17, and a cap 27, which is the top plate of the sealing assembly 17 electrically connected to the internal terminal plate 23, serves as the positive electrode terminal. The negative electrode lead 21 is connected by welding or the like to the inner surface of the bottom of the outer can 16, and the outer can 16 serves as the negative electrode terminal.

A gasket 28 is provided between the outer can 16 and the sealing assembly 17 to ensure airtightness inside the battery. The outer can 16 has a grooved portion 22 formed thereon, where a part of the side wall projects inward, and which supports the sealing assembly 17. The grooved portion 22 is preferably formed in an annular shape along the circumferential direction of the outer can 16, and supports the sealing assembly 17 on its upper surface. The sealing assembly 17 is fixed to an upper part of the outer can 16 by means of the grooved portion 22 and the opening end of the outer can 16 which is crimped to the sealing assembly 17.

The sealing assembly 17 has a structure obtained by laminating, in order from the electrode assembly 14 side, the internal terminal plate 23, a lower vent member 24, an insulating member 25, an upper vent member 26, and the cap 27. Each of the members constituting the sealing assembly 17 has, for example, a disk shape or a ring shape, and the respective members except the insulating member 25 are mutually electrically connected. The lower vent member 24 and the upper vent member 26 are connected to each other at their central portions, and the insulating member 25 is interposed between peripheral portions of these vent members. When the battery internal pressure increases due to abnormal heat generation, the lower vent member 24 deforms and ruptures in a manner pushing up the upper vent member 26 toward the cap 27, and the current path between the lower vent member 24 and the upper vent member 26 is thereby cut off. When the internal pressure increases further, the upper vent member 26 ruptures, and gas is discharged from an opening in the cap 27.

A detailed description will now be given regarding the positive electrode 11, the negative electrode 12, and the separator 13, and in particular regarding the positive electrode active material constituting the positive electrode 11.

[Positive Electrode]

The positive electrode 11 comprises a positive electrode core 30 and a positive electrode mixture layer 31 provided on the positive electrode core 30. As the positive electrode core 30, it is possible to use a foil of a metal such as aluminum that is stable in the potential range of the positive electrode 11, a film having such a metal disposed on its surface, and the like. The positive electrode mixture layer 31 contains a positive electrode active material, a binder, and a conductive agent, and is preferably provided on both sides of the positive electrode core 30 in areas other than the portion to which the positive electrode lead 20 is connected. The positive electrode 11 can be produced, for example, by applying a positive electrode mixture slurry containing the positive electrode active material, the binder, the conductive agent, and the like onto the surfaces of the positive electrode core 30, drying the applied coating, and then compressing the coating to thereby form positive electrode mixture layers 31 on both sides of the positive electrode core 30.

Examples of the conductive agent contained in the positive electrode mixture layer 31 include carbon materials, including carbon black such as acetylene black and Ketjenblack, graphite, carbon nanotubes (CNT), carbon nanofibers, and graphene. Examples of the binder contained in the positive electrode mixture layer 31 include fluororesins such as polytetrafluoroethylene (PTFE) and polyvinylidene fluoride (PVDF), polyacrylonitrile (PAN), polyimides, acrylic resins, and polyolefins. These resins may be used in combination with carboxymethyl cellulose (CMC) or a salt thereof, polyethylene oxide (PEO), and the like.

A positive electrode active material according to an example embodiment includes a first lithium nickel composite oxide having a particle size of greater than or equal to 8 μm and less than or equal to 30 μm, and a second lithium nickel composite oxide having a particle size of less than or equal to 6 μm. A positive electrode active material according to another embodiment includes a first lithium nickel composite oxide having a volume-based median diameter (hereinafter referred to as "D50") of greater than or equal to 8 μm and less than or equal to 30 μm, and a second lithium nickel composite oxide having a D50 of less than or equal to 6 μm. For example, the positive electrode active material is formed by mixing two types of lithium nickel composite oxides having different D50 values. By using the first and second lithium nickel composite oxides, for example, the packing property of the active material in the positive electrode mixture layer 31 is improved, and the positive electrode mixture layer 31 can be densified.

As will be described in more detail later, the first lithium nickel composite oxide is in the form of secondary particles formed by aggregation of primary particles, and at least one selected from Ca and Sr is present at the surface of the primary particles. At least the first lithium nickel composite oxide is in the form of secondary particles formed by aggregation of a large number (10 or more) of primary particles. Further, the total content of Ca and Sr in the first lithium nickel composite oxide is greater than or equal to the total content of Ca and Sr in the second lithium nickel composite oxide. With this feature, the reaction resistance of the positive electrode 11 can be reduced efficiently and effectively.

The positive electrode active material may contain composite oxides other than the first and second lithium nickel composite oxides so long as the object of the present disclosure is not impaired. Examples of such other composite oxides include nickel-free lithium transition metal composite oxides. The positive electrode active material of the present embodiment may contain the first and second lithium nickel composite oxides as the main components, and may be substantially composed of only the first and second lithium nickel composite oxides.

In the positive electrode mixture layer 31, the first and second lithium nickel composite oxides are present in a mass ratio of, for example, 50:50. The mass ratio (X) of the first and second lithium nickel composite oxides is not limited to 50:50. Specifically, the mass ratio (X) is preferably such that $90:10 \leq X \leq 50:50$, and more preferably such that $80:20 \leq X \leq 60:40$. When the contents of the respective composite oxides are different from each other, it is preferable that the content of the first lithium nickel composite oxide is greater than the content of the second lithium nickel composite oxide.

In the present specification, the particle size of the positive electrode active material means the diameter of a circle circumscribing a particle in a cross-sectional image of the positive electrode mixture layer 31. A cross section of the positive electrode mixture layer 31 can be prepared by a cross polisher (CP) method, and an image of the cross section is captured by a scanning electron microscope (SEM). While an average particle size can be calculated by averaging the particle sizes of any 100 particles selected from an SEM image, when the particle size distribution of the positive electrode active material can be measured, D50 can be used instead thereof.

In the present specification, D50 means a particle size at which, in a volume-based particle size distribution, the cumulative frequency from the smaller particle size end reaches 50 %. The particle size distribution of the positive electrode active material can be measured with a laser diffraction particle size distribution measuring device (for example, MT3000II manufactured by MicrotracBEL Corp.) while using water as the dispersion medium. For example, the positive electrode active material has a particle size distribution in which a first peak is present in a particle size range of greater than or equal to 8 $\mu$m and less than or equal to 30 $\mu$m, and a second peak is present in a particle size range of less than or equal to 6 $\mu$m. The particle size distribution of the positive electrode active material can also be measured with an image-type particle size distribution measuring device (for example, CAMSIZER X2 manufactured by MicrotracBEL Corp.) while using water as the dispersion medium.

The positive electrode active material is formed, for example, by mixing a first lithium nickel composite oxide having a D50 of greater than or equal to 8 $\mu$m and less than or equal to 30 $\mu$m, and a second lithium nickel composite oxide having a D50 of less than or equal to 6 $\mu$m. In this case, the D50 of the first lithium nickel composite oxide is more preferably greater than or equal to 10 $\mu$m and less than or equal to 25 $\mu$m, or greater than or equal to 12 $\mu$m and less than or equal to 18 $\mu$m. Further, the D50 of the second lithium nickel composite oxide is more preferably greater than or equal to 1 $\mu$m and less than or equal to 6 $\mu$m. When the D50 values of the two types of composite oxides are within the above-noted ranges, densification of the positive electrode mixture layer 31 can be easily achieved.

As described above, the first lithium nickel composite oxide is in the form of secondary particles formed by aggregation of a large number of primary particles. The average particle size of the primary particles constituting the first lithium nickel composite oxide is, for example, greater than or equal to 0.02 $\mu$m and less than or equal to 1 $\mu$m, and preferably greater than or equal to 0.05 $\mu$m and less than or equal to 0.8 $\mu$m. The average particle size of the primary particles is calculated by measuring the diameters of circles circumscribing 100 primary particles extracted by analysis of a SEM image of cross sections of secondary particles, and averaging the measured values.

As with the first lithium nickel composite oxide, the second lithium nickel composite oxide may be in the form of secondary particles formed by aggregation of a large number of primary particles. **In** this case, the average particle size of the primary particles may be, for example, smaller than the average particle size of the primary particles constituting the first lithium nickel composite oxide, and may be greater than or equal to 0.01 $\mu$m and less than or equal to 0.7 $\mu$m. Alternatively, the second lithium nickel composite oxide may be in the form of individual primary particles or secondary particles formed by aggregation of 2 to 5 primary particles. **In** this case, the charge-discharge cycle characteristic is improved. The second lithium nickel composite oxide in the form of individual primary particles is, for example, single-crystal particles.

The first and second lithium nickel composite oxides have, for example, a layered rock salt structure. Examples of the layered rock salt structure include a layered rock salt structure belonging to the space group R-3m, and a layered rock salt structure belonging to the space group C2/m. Among these, in terms of achieving high capacity and stability of the crystal structure, a layered rock salt structure belonging to the space group R-3m is preferable.

The first and second lithium nickel composite oxides preferably contain Ni in an amount of greater than or equal to 50 mol% based on the total number of moles of metal elements other than Li. By setting the Ni content to greater than or equal to 50 mol%, a battery with a high capacity can be obtained, and the advantageous effect of adding Ca and Sr becomes more notable. The Ni content may be greater than or equal to 80 mol%, or greater than or equal to 85 mol%, based on the total number of moles of metal elements other than Li. The upper limit of the Ni content is, for example, 95 mol%.

The first and second lithium nickel composite oxides preferably further contain at least one selected from Mn and Co. A suitable example of the first and second lithium nickel composite oxides is a lithium nickel composite oxide containing Mn, a lithium nickel composite oxide containing Mn and Co, or a lithium nickel composite oxide containing Co and Al. When the composite oxides contain Co, the Co content is preferably greater than or equal to 1 mol% and less than or equal to 25 mol%, and more preferably greater than or equal to 2 mol% and less than or equal to 7 mol%, based on the total number of moles of metal elements other than Li. **In** this case, it is possible to achieve both high capacity and high durability while keeping material costs down.

When the first and second lithium nickel composite oxides contain Mn, the Mn content is preferably greater than or equal to 5 mol% and less than or equal to 50 mol% based on the total number of moles of metal elements other than Li. When the Ni content is greater than or equal to 80 mol%, the Mn content is, for example, greater than or equal to 5 mol% and less than or equal to 20 mol%. **In** this case, it becomes easy to achieve both high capacity and high durability. When the first and second lithium nickel composite oxides contain Al, the Al content is, for example, greater than or equal to 0.1 mol% and less than or equal to 7 mol% based on the total number of moles of metal elements other than Li.

The first lithium nickel composite oxide further contains at least one selected from Ca and Sr. There may be cases where the second lithium nickel composite oxide does not contain Ca or Sr, but the second lithium nickel composite oxide preferably contains Ca and Sr in an amount less than the content of Ca and Sr in the first lithium nickel composite oxide. Ca and Sr are present at the surface of the primary particles constituting the composite oxides, and are, for example, present at a higher density at the surface than in the interior of the primary particles. Ca and Sr present at the surface of the primary particles can be confirmed by TEM-EDX and STEM-EDX.

Although even a very small amount of Ca and Sr is effective, the lower limit of the content of Ca and Sr is preferably 0.05 mol% based on the total number of moles of metal elements other than Li in the composite oxides. Preferably, at least one of Ca in an amount of greater than or equal to 0.1 mol% and less than or equal to 0.5 mol% and Sr in an amount of greater than or equal to 0.05 mol% and less than or equal to 0.3 mol% is present at the surface of the primary particles constituting the first and second lithium nickel composite oxides, where the amounts are based on the total number of moles of metal elements other than Li. In this case, the resistance of the positive electrode 11 can be reduced efficiently and effectively.

The ratio (r) of the total content of Ca and Sr in the first lithium nickel composite oxide to the total content of Ca and Sr in the second lithium nickel composite oxide is, for example, greater than or equal to 1.0 and less than or equal to 6.0 ($1.0 \leq r \leq 6.0$). The content of Ca and Sr in the first lithium nickel composite oxide may be the same as the content of Ca and Sr in the second lithium nickel composite oxide, but are preferably higher than the content of Ca and Sr in the second lithium nickel composite oxide. Further, as noted above, the second lithium nickel composite oxide preferably contains at least one selected from Ca and Sr at a content lower than that in the first lithium nickel composite oxide.

The above ratio (r) is more preferably greater than or equal to 1.1 and less than or equal to 4.0 ($1.1 \leq r \leq 4.0$), and particularly preferably greater than or equal to 1.5 and less than or equal to 3.0 ($1.5 \leq r \leq 3.0$). In this case, reduction of the reaction resistance becomes more notable. Furthermore, the first and second lithium nickel composite oxides preferably contain both Ca and Sr. The total content of Ca and Sr is preferably greater than or equal to 0.05 mol% and less than or equal to 1 mol%, and more preferably greater than or equal to 0.1 mol% and less than or equal to 0.5 mol%, based on the total number of moles of metal elements other than Li. In this case, reduction of the reaction resistance becomes more notable.

When the first and second lithium nickel composite oxides each contain Ca and Sr, both the Ca content and the Sr content in the first lithium nickel composite oxide are preferably higher than those in the second lithium nickel composite oxide. Further, there may be cases where the second lithium nickel composite oxide contains Ca or Sr while the first lithium nickel composite oxide contains Ca and Sr.

It is sufficient so long as the average value of the total content of Ca and Sr in the first lithium nickel composite oxide is higher than the average value of the total content of Ca and Sr in the second lithium nickel composite oxide. That is, the first lithium nickel composite oxide may include particles in which the total content of Ca and Sr is lower than the average total content of Ca and Sr in the second lithium nickel composite oxide. However, the amount of such particles is small, and the proportion thereof in the first lithium nickel composite oxide is preferably less than or equal to 30 mass%, more preferably less than or equal to 20 mass%, and particularly preferably less than or equal to 10 mass%. Likewise, the second lithium nickel composite oxide may contain particles in which the total content of Ca and Sr is higher than the average total content of Ca and Sr in the first lithium nickel composite oxide.

The positive electrode active material of the present embodiment contains a lithium nickel composite oxide having a high total content of Ca and Sr (referred to as "composite oxide A"), and a lithium nickel composite oxide having a total content of Ca and Sr lower than that of the composite oxide A (referred to as "composite oxide B"). When the D50 (or average particle size) values of the composite oxides A and B are compared, the D50 (or average particle size) of the composite oxide A is greater than the D50 (or average particle size) of the composite oxide B.

The first and second lithium nickel composite oxides may contain elements other than Li, Ni, Mn, Co, Al, Ca, and Sr. Examples of such other elements include Nb, Zr, Ti, W, Si, B, S, Mg, Fe, Cu, Na, K, Ba, and Mo. When the composite oxides contain such other elements, it is preferable that the composite oxides contain at least one selected from W, Mo, Ti, Nb, and Zr. In this case, reduction of the reaction resistance becomes more notable. The content of such other elements in the first lithium nickel composite oxide may be higher than the content of such other elements in the second lithium nickel composite oxide. Furthermore, while the first and second lithium nickel composite oxides may, for example, contain the same type of elements, the elements contained may be different between the two composite oxides, such as in the case where only one of the composite oxides contains such other elements.

At least one selected from the below-listed first, second, and third compounds may be adhered to the surface of the primary particles constituting the first and second lithium nickel composite oxides.

First compound: A compound containing at least one selected from Ca and Sr.

Second compound: A compound containing at least one selected from W, Mo, Ti, Nb, and Zr.

Third compound: A compound containing at least one selected from Ca and Sr, and at least one selected from W, Mo, Ti, Nb, and Zr.

The first and second lithium nickel composite oxides are, for example, composite oxides represented by the composition formula $Li_xNi_aCo_bMn_cAl_dCa_eSr_fM_gO_y$ (where $0.8 \leq x \leq 1.2$, $0.5 \leq a < 1$, $0 \leq b \leq 0.2$, $0 \leq c \leq 0.5$, $0 \leq d \leq 0.05$, $0 \leq e \leq 0.005$, $0 \leq f \leq 0.003$, $1 \leq y \leq 2$, $a+b+c+d+e+f+g = 1$, and at least one of e and f is greater than 0). The contents of the elements in the composite oxides can be measured by an inductively coupled plasma atomic emission spectrometer (ICP-AES), an electron probe microanalyzer (EPMA), or an energy dispersive X-ray analyzer (EDX).

The first and second lithium nickel composite oxides can each be synthesized, for example, by mixing together an oxide containing at least Ni and preferably containing other metal elements such as Mn, Co, and Al, a Ca raw material, a Sr raw material, and a Li raw material such as lithium hydroxide (LiOH), and firing the mixture. The fired product is pulverized and then washed with water, and a lithium nickel composite oxide is thereby obtained. The water-washing step may be omitted. Examples of the Ca raw material include $Ca(OH)_2$, $CaO$, $CaCO_3$, $CaSO_4$, and $Ca(NO_3)_2$. Examples of the Sr raw material include $Sr(OH)_2$, $Sr(OH)_2 \cdot H_2O$, $Sr(OH)_2 \cdot 8H_2O$, $SrO$, $SrCO_3$, $SrSO_4$, and $Sr(NO_3)_2$.

The molar ratio (or Li/Me ratio) of the metal elements (Me) in the composite oxide and Li in the Li raw material, as well as the firing conditions, are important factors in controlling the physical properties of the composite oxide particles, including the particle size. A suitable Li/Me ratio varies somewhat depending on the composition of the mixture, but is, in one example, greater than or equal to 1.015 and less than or equal to 1.055.

The mixture firing process includes, for example, a first firing process and a second firing process performed at a temperature higher than in the first firing process. Firing of the mixture is performed in an oxygen atmosphere, and at that time, the oxygen concentration is set to, for example, higher than or equal to 85 %. A suitable first firing temperature varies somewhat depending on the composition of the mixture, but is, in one example, higher than or equal to 500 °C and lower than or equal to 680 °C. A suitable second firing temperature is, for example, higher than or equal to 700 °C and lower than or equal to 850 °C. It is preferable that there is a temperature difference of more than or equal to 50 °C between the respective firing processes.

The firing process is carried out by placing the mixture in a firing furnace. The firing process may include a plurality of heating steps having heating rates different from each other. For example, the temperature may be increased from room temperature to the first firing temperature at a rate of more than or equal to 1.0 °C/min and less than or equal to 5.5 °C/min (first heating step), and then increased from the first firing temperature to the second firing temperature at a rate of more than or equal to 0.1 °C/min and less than or equal to 3.5 °C/min, which is a rate lower than that in the first heating step (second heating step). The maximum temperature reached in the firing process may be maintained for a predetermined period of time (for example, more than or equal to 1 hour and less than or equal to 10 hours).

The lithium nickel composite oxide can be obtained by causing a composite hydroxide containing Ni and any desired metal elements and having a desired particle size to be precipitated (or co-precipitated), and then heat-treating the composite hydroxide. The composite hydroxide can be synthesized, for example, by adding dropwise an alkaline solution of sodium hydroxide or the like to a solution of a metal salt containing Ni and any desired metal elements (such as Co, Al, and Mn) while stirring so as to adjust the pH to the alkaline side (for example, to a value of greater than or equal to 8.5 and less than or equal to 12.5). The particle size of the composite hydroxide tends to be smaller when the pH during synthesis is higher. The particle size of the composite hydroxide can also be controlled by adjusting the amount of the metal salt solution added, and for example, the particle size tends to be larger when the amount of the solution added is increased. The first lithium nickel composite oxide and the second lithium nickel composite oxide can be selectively produced by controlling the particle sizes of the composite hydroxides that serve as the respective precursors.

[Negative Electrode]

The negative electrode 12 comprises a negative electrode core 40 and a negative electrode mixture layer 41 provided on the negative electrode core 40. As the negative electrode core 40, it is possible to use a foil of a metal such as copper that is stable in the potential range of the negative electrode 12, a film having such a metal disposed on its surface, and the like. The negative electrode mixture layer 41 contains a negative electrode active material and a binder, and is preferably provided on both sides of the negative electrode core 40 in areas other than the portion to which the negative electrode lead 21 is connected. The negative electrode 12 can be produced, for example, by applying a negative electrode mixture slurry containing the negative electrode active material, the binder, and the like onto the surfaces of the negative electrode core 40, drying the applied coating, and then compressing the coating to thereby form negative electrode mixture layers 41 on both sides of the negative electrode core 40.

As the negative electrode active material, a carbon material that reversibly occludes and releases lithium ions is generally used. A suitable example of the carbon material is graphite, including natural graphite such as flake graphite, massive graphite, and amorphous graphite, and artificial graphite such as massive artificial graphite (MAG) and graphitized mesophase carbon microbeads (MCMB). As the negative electrode active material, it is also possible to use an element that forms an alloy with Li, such as Si or Sn, a material containing such an element, and the like. Among the foregoing, a composite material containing Si is preferable. A suitable example of the Si-containing composite material is a Si-containing material in which a fine Si phase is dispersed in a $SiO_2$ phase, a silicate phase composed of lithium silicate or the like, a carbon phase, or a silicide phase. As the negative electrode active material, graphite and the Si-containing material may be used in combination.

As the binder contained in the negative electrode mixture layer 41, fluororesins, PAN, polyimides, acrylic resins, polyolefins, and the like can be used as in the case of the positive electrode 11, but styrene-butadiene rubber (SBR) is preferably used. Further, the negative electrode mixture layer 41 preferably additionally contains CMC or a salt thereof, polyacrylic acid (PAA) or a salt thereof, polyvinyl alcohol (PVA), or the like. Among the foregoing, use of SBR in combination with CMC or a salt thereof or PAA or a salt thereof is suitable. The negative electrode mixture layer 41 may contain a conductive agent such as CNT.

[Separator]

As the separator 13, a porous sheet having ion permeability and insulating property is used. Specific examples of the porous sheet include a microporous thin film, a woven fabric, and a non-woven fabric. As the material of the separator 13, polyolefins such as polyethylene and polypropylene, cellulose, and the like are suitable. The separator 13 may have either a single-layer structure or a multi-layer structure. Further, on the surface of the separator 13, there may be formed a highly heat-resistant resin layer made of aramid resin or the like.

A filler layer containing an inorganic filler may be formed at the interface between the separator 13 and at least one of the positive electrode 11 and the negative electrode 12. Examples of the inorganic filler include oxides and phosphate compounds containing metal elements such as Ti, Al, Si, and Mg. The filler layer can be formed by applying a slurry containing the filler onto the surface of the positive electrode 11, the negative electrode 12, or the separator 13.

EXAMPLES

While the present disclosure will now be further described using Examples, the present disclosure is not limited to these Examples.

<Example A1>

[Synthesis of First Lithium Nickel Composite Oxide]

A composite hydroxide containing Ni, Co, and Mn in a molar ratio of 85:5:10 was synthesized by a co-precipitation method, and then heat-treated at 600 °C to obtain a composite oxide. In the synthesis of the composite hydroxide, the pH and the amount of the metal salt solution were adjusted so that the D50 of the lithium nickel composite oxide to be finally obtained would be approximately 15 μm. The oxide, calcium hydroxide, and lithium hydroxide were mixed together so that the molar ratio (or Li/Me ratio) of the metal elements (Me) in the composite oxide and Li in the lithium hydroxide was 1:1.020. This mixture was placed in a firing furnace and fired in two stages. In the firing process, the mixture was heated in an oxygen stream having an oxygen concentration of 95 % (with a flow rate of 2 mL/min per 10 $cm^3$ and 5 L/min per 1 kg of the mixture) from room temperature to 650 °C (hereinafter referred to as the "first firing temperature") at a heating rate of 3 °C/min (hereinafter referred to as the "first heating rate"). After that, the temperature was increased from 650 °C to 750 °C (hereinafter referred to as the "second firing temperature") at a heating rate of 1 °C/min (hereinafter referred to as the "second heating rate"), and the temperature was maintained at 750 °C for 3 hours. The fired product was pulverized and then washed with water, and a first lithium nickel composite oxide was thereby obtained.

The obtained first lithium nickel composite oxide was analyzed by ICP-AES, and as a result, the Ca content was 0.2 mol% based on the total amount of metal elements other than Li. The volume-based D50 of the composite oxide as measured with MT3000II manufactured by MicrotracBEL Corp. while using water as the dispersion medium was 15 μm. From a SEM image, it was confirmed that the composite oxide was in the form of secondary particles formed by aggregation of primary particles, and using TEM-EDX, it was confirmed that Ca was present at the surface of the primary particles.

[Synthesis of Second Lithium Nickel Composite Oxide]

A second lithium nickel composite oxide was obtained by the same method as the synthesis method of the first lithium nickel composite oxide, except that the pH and the amount of the metal salt solution used at the time of synthesis of the composite hydroxide were adjusted so that the D50 of the lithium nickel composite oxide would become approximately

5 μm, and the amount of calcium hydroxide added was reduced by 50 %. The second lithium nickel composite oxide was analyzed by the same method as that for the first lithium nickel composite oxide, and as a result, the Ca content was 0.10 mol% based on the total amount of metal elements other than Li, and the volume-based D50 was 5 μm. Further, it was confirmed that the second lithium nickel composite oxide was in the form of secondary particles formed by aggregation of primary particles, and using TEM-EDX, it was confirmed that Ca was present at the surface of the primary particles.

[Production of Positive Electrode]

A material obtained by mixing the above first and second lithium nickel composite oxides in a mass ratio of 1:1 was used as the positive electrode active material. A positive electrode mixture slurry was prepared by mixing together the positive electrode active material, acetylene black, and polyvinylidene fluoride (PVdF) in a solids mass ratio of 95:3:2, and using N-methyl-2-pyrrolidone (NMP) as the dispersion medium. The positive electrode mixture slurry was applied to both sides of a positive electrode core 30 made of aluminum foil, and the applied coating was dried and then rolled using a roller. The resulting product was cut into a predetermined electrode size, and a positive electrode having positive electrode mixture layers 31 formed on both sides of the positive electrode core 30 was obtained. In a part of the positive electrode, there was provided an exposed portion where a surface of the positive electrode core 30 was exposed.

[Production of Negative Electrode]

Natural graphite was used as the negative electrode active material. A negative electrode mixture slurry was prepared by mixing together the negative electrode active material, sodium carboxymethyl cellulose (CMC-Na), and a dispersion of styrene-butadiene rubber (SBR) in a solids mass ratio of 100:1:1, and using water as the dispersion medium. The negative electrode mixture slurry was applied to both sides of a negative electrode core made of copper foil, and the applied coating was dried and then rolled using a roller. The resulting product was cut into a predetermined electrode size, and a negative electrode having negative electrode mixture layers formed on both sides of the negative electrode core was obtained. In a part of the negative electrode, there was provided an exposed portion where a surface of the negative electrode core was exposed.

[Preparation of Non-Aqueous Electrolyte Solution]

Into a mixed solvent prepared by mixing together ethylene carbonate (EC), methyl ethyl carbonate (MEC), and dimethyl carbonate (DMC) in a volume ratio of 3:3:4 (at 25 °C), $LiPF_6$ was dissolved to a concentration of 1.2 mol/L, and a non-aqueous electrolyte solution was thereby prepared.

[Production of Test Cell (Non-Aqueous Electrolyte Secondary Battery)]

An aluminum lead was attached to the exposed portion of the above positive electrode, and a nickel lead was attached to the exposed portion of the above negative electrode. The positive electrode and the negative electrode were wound in a spiral shape with an interposed separator made of polyolefin to thereby produce a spiral-type electrode assembly. This electrode assembly was housed in a bottomed cylindrical outer can, and after injecting the above non-aqueous electrolyte solution therein, the opening of the outer can was sealed with a sealing assembly to obtain a test cell.

<Example A2>

A test cell was produced in the same manner as in Example A1 except that, in the synthesis of the first and second lithium nickel composite oxides, strontium hydroxide instead of calcium hydroxide was added so that the Sr contents were 0.15 mol% and 0.07 mol%, respectively.

<Example A3>

A test cell was produced in the same manner as in Example A1 except that, in the synthesis of the first and second lithium nickel composite oxides, strontium hydroxide was further added so that the Sr contents were 0.15 mol% and 0.07 mol%, respectively.

<Example A4>

A test cell was produced in the same manner as in Example A1 except that, in the synthesis of the second lithium nickel composite oxide, the amount of calcium hydroxide added was increased so that the Ca content was 0.20 mol%.

<Example A5>

A test cell was produced in the same manner as in Example A2 except that, in the synthesis of the second lithium nickel composite oxide, the amount of strontium hydroxide added was increased so that the Sr content was 0.15 mol%.

<Example A6>

A test cell was produced in the same manner as in Example A3 except that, in the synthesis of the second lithium nickel composite oxide, the amounts of calcium hydroxide and strontium hydroxide added were increased so that the Ca content was 0.20 mol% and the Sr content was 0.15 mol%.

<Example A7>

A test cell was produced in the same manner as in Example A1 except that, in the synthesis of the second lithium nickel composite oxide, calcium hydroxide was not added.

<Example A8>

In the synthesis of the second lithium nickel composite oxide, calcium hydroxide was not added, and KOH was added to the mixture in an amount of 10 mass% based on the expected composition of Ni-containing lithium transition metal oxide ($Li_{1.03}Ni_{0.85}Co_{0.05}Mn_{0.10}O_2$). After that, a test cell was produced in the same manner as in Example A1 except that the mixture was fired in an oxygen stream at 750 °C for 40 hours. The obtained second lithium nickel composite oxide was in the form of particles having a volume-based D50 of 5 $\mu$m, which were individual primary particles or particles composed of 1 to 5 primary particles.

<Example A9>

A test cell was produced in the same manner as in Example A1 except that, in the synthesis of the first and second lithium nickel composite oxides, niobium pentoxide was added so that the Nb content was 0.50 mol%.

<Example A10>

A test cell was produced in the same manner as in Example A1 except that, in the synthesis of the first and second lithium nickel composite oxides, zirconium oxide was added so that the Zr content was 0.50 mol%.

<Example A11>

A test cell was produced in the same manner as in Example Al except that, in the synthesis of the first and second lithium nickel composite oxides, titanium oxide was added so that the Ti content was 0.50 mol%.

<Example A12>

A test cell was produced in the same manner as in Example A1 except that, in the synthesis of the first and second lithium nickel composite oxides, molybdenum oxide was added so that the Mo content was 0.50 mol%.

<Example A13>

A test cell was produced in the same manner as in Example A1 except that, in the synthesis of the first and second lithium nickel composite oxides, tungsten oxide was added so that the W content was 0.50 mol%.

<Comparative Example B1>

A test cell was produced in the same manner as in Example A1 except that, in the synthesis of the first and second lithium nickel composite oxides, calcium hydroxide was not added.

<Comparative Example B2>

A test cell was produced in the same manner as in Example A4 except that, in the synthesis of the first lithium nickel composite oxide, the amount of calcium hydroxide added was reduced so that the Ca content was 0.10 mol%.

<Comparative Example B3>

A test cell was produced in the same manner as in Example A5 except that, in the synthesis of the first lithium nickel composite oxide, the amount of strontium hydroxide added was reduced so that the Sr content was 0.07 mol%.

<Comparative Example B4>

A test cell was produced in the same manner as in Example A6 except that, in the synthesis of the second lithium nickel composite oxide, the amounts of calcium hydroxide and strontium hydroxide added were reduced so that the Ca content was 0.10 mol% and the Sr content was 0.07 mol%.

<Comparative Example B5>

A test cell was produced in the same manner as in Example A1 except that, in the synthesis of the first and second lithium nickel composite oxides, magnesium hydroxide instead of calcium hydroxide was added so that the Mg contents were 0.20 mol% and 0.10 mol%, respectively.

<Comparative Example B6>

A test cell was produced in the same manner as in Example A1 except that, in the synthesis of the first and second lithium nickel composite oxides, barium hydroxide instead of calcium hydroxide was added so that the Ba contents were 0.20 mol% and 0.10 mol%, respectively.

<Examples C1 to C6>

Composite oxides were synthesized and test cells were produced in the same manner as in Examples A1 to A6, respectively, except that, as the raw material for the first and second lithium nickel composite oxides, a composite oxide containing Ni, Co, and Mn in a molar ratio of 50:20:30 was used instead of the composite oxide containing Ni, Co, and Mn in a molar ratio of 85:5:10, the second firing temperature was set to 850 °C, and no water washing was performed after firing. The physical properties of the obtained composite oxides were similar to those of the composite oxides of Examples A1 to A6.

<Examples C7 to C11>

Composite oxides were synthesized and test cells were produced in the same manner as in Examples A9 to A13, respectively, except that, as the raw material for the first and second lithium nickel composite oxides, a composite oxide containing Ni, Co, and Mn in a molar ratio of 50:20:30 was used instead of the composite oxide containing Ni, Co, and Mn in a molar ratio of 85:5:10, the second firing temperature was set to 850 °C, and no water washing was performed after firing. The physical properties of the obtained composite oxides were similar to those of the composite oxides of Examples A9 to A13.

<Comparative Examples D1 to D4>

Composite oxides were synthesized and test cells were produced in the same manner as in Comparative Examples B1 to B4, respectively, except that, as the raw material for the first and second lithium nickel composite oxides, a composite oxide containing Ni, Co, and Mn in a molar ratio of 50:20:30 was used instead of the composite oxide containing Ni, Co, and Mn in a molar ratio of 85:5:10, the second firing temperature was set to 850 °C, and no water washing was performed after firing.

<Comparative Examples D5 and D6>

Composite oxides were synthesized and test cells were produced in the same manner as in Comparative Examples B5 and B6, respectively, except that, as the raw material for the first and second lithium nickel composite oxides, a composite oxide containing Ni, Co, and Mn in a molar ratio of 50:20:30 was used instead of the composite oxide containing Ni, Co, and Mn in a molar ratio of 85:5:10, the second firing temperature was set to 850 °C, and no water washing was performed after firing.

For each of the test cells of the above Examples and Comparative Examples, the direct current resistance (DCR) was measured, and the evaluation results were shown in table form. The evaluation results shown in Table 1 are values relative to the DCR value of the test cell of Comparative Example B1, which is assumed to be 100. The evaluation results shown in Table 2 are values relative to the DCR value of the test cell of Comparative Example D1, which is assumed to be 100.

[Evaluation of Direct Current Resistance (DCR)]

In a temperature environment of 25 °C, each of the above test cells was charged at a constant current of 0.2 C until the cell voltage reached 4.2 V, and then charged at a constant voltage of 4.2 V until the current value reached 0.01 C. After that, the test cell was discharged at a current value of 1.0 C for 10 seconds, the amount of voltage drop due to the discharge was measured, and the DCR was determined by the following formula.

$$\text{DCR (m}\Omega) = (\text{Amount of voltage drop (mV) / Current value (A)})$$

[Table 1]

| | | First composite oxide | | Second composite oxide | | DCR |
|---|---|---|---|---|---|---|
| | Basic composition of composite oxides | Added element | Added ratio (mol%) | Added element | Added ratio (mol%) | |
| A1 | Ni/Co/Mn = 85/5/10 | Ca | 0.20 | Ca | 0.10 | 94 |
| A2 | Ni/Co/Mn = 85/5/10 | Sr | 0.15 | Sr | 0.07 | 94 |
| A3 | Ni/Co/Mn = 85/5/10 | Ca, Sr | 0.20, 0.15 | Ca, Sr | 0.10, 0.07 | 92 |
| A4 | Ni/Co/Mn = 85/5/10 | Ca | 0.20 | Ca | 0.20 | 95 |
| A5 | Ni/Co/Mn = 85/5/10 | Sr | 0.15 | Sr | 0.15 | 95 |
| A6 | Ni/Co/Mn = 85/5/10 | Ca, Sr | 0.20, 0.15 | Ca, Sr | 0.20, 0.15 | 94 |
| A7 | Ni/Co/Mn = 85/5/10 | Ca | 0.20 | (n/a) | - | 94 |
| A8 | Ni/Co/Mn = 85/5/10 | Ca | 0.20 | (n/a; single-crystal) | - | 95 |
| A9 | Ni/Co/Mn = 85/5/10 | Ca, Nb | 0.20, 0.5 | Ca, Nb | 0.10, 0.5 | 88 |
| A10 | Ni/Co/Mn = 85/5/10 | Ca, Zr | 0.20, 0.5 | Ca, Zr | 0.10, 0.5 | 90 |
| A11 | Ni/Co/Mn = 85/5/10 | Ca, Ti | 0.20, 0.5 | Ca, Ti | 0.10, 0.5 | 90 |
| A12 | Ni/Co/Mn = 85/5/10 | Ca, Mo | 0.20, 0.5 | Ca, Mo | 0.10, 0.5 | 89 |
| A13 | Ni/Co/Mn = 85/5/10 | Ca, W | 0.20, 0.5 | Ca, W | 0.10, 0.5 | 88 |
| B1 | Ni/Co/Mn = 85/5/10 | (n/a) | - | (n/a) | - | 100 |
| B2 | Ni/Co/Mn = 85/5/10 | Ca | 0.10 | Ca | 0.20 | 99 |
| B3 | Ni/Co/Mn = 85/5/10 | Sr | 0.07 | Sr | 0.15 | 98 |
| B4 | Ni/Co/Mn = 85/5/10 | Ca, Sr | 0.10, 0.07 | Ca, Sr | 0.20, 0.15 | 98 |
| B5 | Ni/Co/Mn = 85/5/10 | Mg | 0.2 | Mg | 0.1 | 100 |
| B6 | Ni/Co/Mn = 85/5/10 | Ba | 0.2 | Ba | 0.1 | 102 |

[Table 2]

| | | First composite oxide | | Second composite oxide | | DCR |
|---|---|---|---|---|---|---|
| | Basic composition of composite oxides | Added element | Added ratio (mol%) | Added element | Added ratio (mol%) | |
| C1 | Ni/Co/Mn = 50/20/30 | Ca | 0.20 | Ca | 0.10 | 93 |
| C2 | Ni/Co/Mn = 50/20/30 | Sr | 0.15 | Sr | 0.07 | 92 |
| C3 | Ni/Co/Mn = 50/20/30 | Ca, Sr | 0.20, 0.15 | Ca, Sr | 0.10, 0.07 | 92 |

(continued)

| | Basic composition of composite oxides | First composite oxide | | Second composite oxide | | DCR |
|---|---|---|---|---|---|---|
| | | Added element | Added ratio (mol%) | Added element | Added ratio (mol%) | |
| C4 | Ni/Co/Mn = 50/20/30 | Ca | 0.20 | Ca | 0.20 | 94 |
| C5 | Ni/Co/Mn = 50/20/30 | Sr | 0.15 | Sr | 0.15 | 93 |
| C6 | Ni/Co/Mn = 50/20/30 | Ca, Sr | 0.20, 0.15 | Ca, Sr | 0.20, 0.15 | 94 |
| C7 | Ni/Co/Mn = 85/5/10 | Ca, Nb | 0.20, 0.5 | Ca, Nb | 0.10, 0.5 | 89 |
| C8 | Ni/Co/Mn = 85/5/10 | Ca, Zr | 0.20, 0.3 | Ca, Zr | 0.10, 0.3 | 91 |
| C9 | Ni/Co/Mn = 85/5/10 | Ca, Ti | 0.20, 0.5 | Ca, Ti | 0.10, 0.5 | 90 |
| C10 | Ni/Co/Mn = 85/5/10 | Ca, Mo | 0.20, 0.5 | Ca, Mo | 0.10, 0.5 | 88 |
| C11 | Ni/Co/Mn = 85/5/10 | Ca, W | 0.20, 0.5 | Ca, W | 0.10, 0.5 | 88 |
| D1 | Ni/Co/Mn = 50/20/30 | (n/a) | - | (n/a) | - | 100 |
| D2 | Ni/Co/Mn = 50/20/30 | Ca | 0.10 | Ca | 0.20 | 99 |
| D3 | Ni/Co/Mn = 50/20/30 | Sr | 0.07 | Sr | 0.15 | 98 |
| D4 | Ni/Co/Mn = 50/20/30 | Ca, Sr | 0.10, 0.07 | Ca, Sr | 0.20, 0.15 | 98 |
| D5 | Ni/Co/Mn = 85/5/10 | Mg | 0.2 | Mg | 0.1 | 100 |
| D6 | Ni/Co/Mn = 85/5/10 | Ba | 0.2 | Ba | 0.1 | 102 |

As shown in Tables 1 and 2, all of the test cells of the Examples had lower DCR than the test cells of the Comparative Examples, and it is understood that the positive electrode active materials of the Examples have an excellent resistance reducing effect. In particular, when the Ca and Sr contents in the first lithium nickel composite oxide are higher than the Ca and Sr contents in the second lithium nickel composite oxide, and when both Ca and Sr are added, the DCR reducing effect is more notable. Furthermore, when W, Mo, Ti, Nb, or Zr is added to the lithium nickel composite oxides, a particularly excellent resistance reducing effect is obtained.

The present disclosure is further illustrated by the following embodiments.

Configuration 1: A positive electrode active material for secondary battery, including a first lithium nickel composite oxide having a volume-based median diameter (D50) of greater than or equal to 8 $\mu$m and less than or equal to 30 $\mu$m, and a second lithium nickel composite oxide having a volume-based median diameter (D50) of less than or equal to 6 $\mu$m, wherein the first lithium nickel composite oxide is in a form of secondary particles formed by aggregation of primary particles, with at least one selected from Ca and Sr being present at a surface of the primary particles, and a content of Ca and Sr in the first lithium nickel composite oxide is greater than or equal to a content of Ca and Sr in the second lithium nickel composite oxide.

Configuration 2: The positive electrode active material for secondary battery according to Configuration 1, wherein a compound containing at least one selected from Ca, Sr, W, Mo, Ti, Nb, and Zr is present at the surface of the primary particles constituting the first lithium nickel composite oxide and the second lithium nickel composite oxide.

Configuration 3: The positive electrode active material for secondary battery according to Configuration 1 or 2, wherein at least one of Ca in an amount of greater than or equal to 0.1 mol% and less than or equal to 0.5 mol% and Sr in an amount of greater than or equal to 0.05 mol% and less than or equal to 0.3 mol% is present at the surface of the primary particles constituting the first lithium nickel composite oxide and the second lithium nickel composite oxide, where the amounts are based on a total number of moles of metal elements other than Li.

Configuration 4: The positive electrode active material for secondary battery according to any one of Configurations 1 to 3, wherein a ratio (r) of the content of Ca and Sr in the first lithium nickel composite oxide to the content of Ca and Sr in the second lithium nickel composite oxide is greater than or equal to 1.0 and less than or equal to 6.0 ($1.0 \leq r \leq 6.0$).

Configuration 5: The positive electrode active material for secondary battery according to any one of Configurations 1 to 4, wherein the first lithium nickel composite oxide and the second lithium nickel composite oxide further contain at least one selected from W, Mo, Ti, Nb, and Zr.

Configuration 6: The positive electrode active material for secondary battery according to any one of Configurations 1 to 5, wherein the second lithium nickel composite oxide is in a form of individual primary particles or secondary particles formed by aggregation of 2 to 5 primary particles.

Configuration 7: The positive electrode active material for secondary battery according to any one of Configurations 1 to 6, wherein the first lithium nickel composite oxide and the second lithium nickel composite oxide contain Ni in an amount of greater than or equal to 50 mol% based on a total number of moles of metal elements other than Li.

Configuration 8: A secondary battery, comprising a positive electrode including the positive electrode active material according to any one of Configurations 1 to 7, a negative electrode, and an electrolyte.

REFERENCE SIGNS LIST

10 secondary battery; 11 positive electrode; 12 negative electrode; 13 separator; 14 electrode assembly; 16 outer can; 17 sealing assembly; 18, 19 insulating plate; 20 positive electrode lead; 21 negative electrode lead; 22 grooved portion; 23 internal terminal plate; 24 lower vent member; 25 insulating member; 26 upper vent member; 27 cap; 28 gasket; 30 positive electrode core; 31 positive electrode mixture layer; 40 negative electrode core; 41 negative electrode mixture layer

**Claims**

1. A positive electrode active material for secondary battery, including

   a first lithium nickel composite oxide having a particle size of greater than or equal to 8 $\mu$m and less than or equal to 30 $\mu$m, and a second lithium nickel composite oxide having a particle size of less than or equal to 6 $\mu$m, wherein
   the first lithium nickel composite oxide is in a form of secondary particles formed by aggregation of primary particles, with at least one selected from Ca and Sr being present at a surface of the primary particles, and
   a total content of Ca and Sr in the first lithium nickel composite oxide is greater than or equal to a total content of Ca and Sr in the second lithium nickel composite oxide.

2. A positive electrode active material for secondary battery, including

   a first lithium nickel composite oxide having a volume-based median diameter (D50) of greater than or equal to 8 $\mu$m and less than or equal to 30 $\mu$m, and a second lithium nickel composite oxide having a volume-based median diameter (D50) of less than or equal to 6 $\mu$m, wherein
   the first lithium nickel composite oxide is in a form of secondary particles formed by aggregation of primary particles, with at least one selected from Ca and Sr being present at a surface of the primary particles, and
   a total content of Ca and Sr in the first lithium nickel composite oxide is greater than or equal to a total content of Ca and Sr in the second lithium nickel composite oxide.

3. The positive electrode active material for secondary battery according to claim 1 or 2, wherein at least one of Ca in an amount of greater than or equal to 0.1 mol% and less than or equal to 0.5 mol% and Sr in an amount of greater than or equal to 0.05 mol% and less than or equal to 0.3 mol% is present at the surface of the primary particles constituting the first lithium nickel composite oxide and the second lithium nickel composite oxide, where the amounts are based on a total number of moles of metal elements other than Li.

4. The positive electrode active material for secondary battery according to claim 1 or 2, wherein a ratio (r) of the total content of Ca and Sr in the first lithium nickel composite oxide to the total content of Ca and Sr in the second lithium nickel composite oxide is greater than or equal to 1.0 and less than or equal to 6.0 ($1.0 \leq r \leq 6.0$).

5. The positive electrode active material for secondary battery according to claim 1 or 2, wherein the first lithium nickel composite oxide and the second lithium nickel composite oxide further contain at least one selected from W, Mo, Ti, Nb, and Zr.

6. The positive electrode active material for secondary battery according to claim 1 or 2, wherein the second lithium nickel composite oxide is in a form of individual primary particles or secondary particles formed by aggregation of 2 to 5 primary particles.

7. The positive electrode active material for secondary battery according to claim 1 or 2, wherein the first lithium nickel composite oxide and the second lithium nickel composite oxide contain Ni in an amount of greater than or equal to 50 mol% based on a total number of moles of metal elements other than Li.

8. A secondary battery, comprising a positive electrode including the positive electrode active material according to claim 1 or 2, a negative electrode, and an electrolyte.

# Figure 1

**EP 4 593 116 A1**

<table>
<tr><td colspan="2">INTERNATIONAL SEARCH REPORT</td><td colspan="2">International application No.<br><br>**PCT/JP2023/031101**</td></tr>
</table>

| A. | CLASSIFICATION OF SUBJECT MATTER |
|---|---|
| | *H01M 4/525*(2010.01)i; *H01M 4/36*(2006.01)i<br>FI:   H01M4/525; H01M4/36 D |

According to International Patent Classification (IPC) or to both national classification and IPC

| B. | FIELDS SEARCHED |
|---|---|

Minimum documentation searched (classification system followed by classification symbols)

    H01M4/525; H01M4/36

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2013-065467 A (PANASONIC CORP) 11 April 2013 (2013-04-11)<br>    claims, paragraphs [0016]-[0020] | 1-8 |
| Y | CN 104681808 A (LIUZHOU HUILIN TECHNOLOGY CO., LTD.) 03 June 2015<br>(2015-06-03)<br>    claims, paragraph [0030] | 1-8 |
| Y | CN 105161714 A (UNIVERSITY OF CHINESE ACADEMY OF SCIENCES) 16 December<br>2015 (2015-12-16)<br>    claims, paragraphs [0006]-[0013] | 1-8 |
| A | JP 2020-532842 A (LG CHEMICAL LTD) 12 November 2020 (2020-11-12)<br>    claims | 1-8 |
| A | JP 2010-535699 A (UMICORE S. A.) 25 November 2010 (2010-11-25)<br>    claims | 1-8 |

☐ Further documents are listed in the continuation of Box C.     ☑ See patent family annex.

| * | Special categories of cited documents: | |
|---|---|---|
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **02 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

16

INTERNATIONAL SEARCH REPORT
Information on patent family members

International application No.

**PCT/JP2023/031101**

| Patent document cited in search report | | | Publication date (day/month/year) | Patent family member(s) | | | Publication date (day/month/year) |
|---|---|---|---|---|---|---|---|
| JP | 2013-065467 | A | 11 April 2013 | (Family: none) | | | |
| CN | 104681808 | A | 03 June 2015 | (Family: none) | | | |
| CN | 105161714 | A | 16 December 2015 | (Family: none) | | | |
| JP | 2020-532842 | A | 12 November 2020 | US claims | 2020/0083524 | A1 | |
| | | | | EP | 3609003 | A1 | |
| | | | | KR | 10-2019-0051863 | A | |
| | | | | CN | 110574194 | A | |
| JP | 2010-535699 | A | 25 November 2010 | US claims | 2011/0260099 | A1 | |
| | | | | EP | 2178800 | A1 | |
| | | | | CN | 101896431 | A | |

Form PCT/ISA/210 (patent family annex) (January 2015)

**REFERENCES CITED IN THE DESCRIPTION**

**Patent documents cited in the description**

- JP 2018129221 A